# EUROPÄISCHE PATENTSCHRIFT

(11) **EP 2 681 656 B1**
(45) Veröffentlichungstag und Bekanntmachung des Hinweises auf die Patenterteilung: **18.01.2017**
(21) Anmeldenummer: 11723897.2
(22) Anmeldetag: 17.05.2011
(51) Int. Cl.: G06F 9/48, G06F 9/50

(54) **MULTICORE HOST-SYSTEM MIT EINER ECHTZEIT-ERWEITERUNG UND VERFAHREN ZUM BETREIBEN EINES SOLCHEN HOST-SYSTEMS**
MULTICORE HOST-SYSTEM MIT EINER ECHZEIT-ERWEITERUNG UND VERFAHREN ZUM BETREIBEN EINES SOLCHEN HOST-SYSTEMS
ORDINATEUR HÔTE MULTICOEUR DOTÉ D'UNE EXTENSION TEMPS RÉEL ET PROCÉDÉ DE FONCTIONNEMENT D'UN TEL ORDINATEUR HÔTE

(43) Veröffentlichungstag der Anmeldung: 08.01.2014
(73) Patentinhaber: Siemens Aktiengesellschaft, 80333 München (DE)
(72) Erfinder: HARTMANN, Wolfgang, 91086 Aurachtal (DE)
(86) Internationale Anmeldenummer: PCT/EP2011/057931
(87) Internationale Veröffentlichungsnummer: WO 2012/155963

(56) Entgegenhaltungen:
- US-A1- 2011 087 815
- CHRISTOF PITTER ET AL: "A real-time Java chip-multiprocessor", ACM TRANSACTIONS ON EMBEDDED COMPUTING SYSTEMS, Bd. 10, Nr. 1, 1. August 2010 (2010-08-01) , Seiten 1-34, XP55042152, ISSN: 1539-9087, DOI: 10.1145/1814539.1814548
- EMILIANO BETTI ET AL: "Hard Real-Time Performances in Multiprocessor-Embedded Systems Using ASMP-Linux", EURASIP JOURNAL ON EMBEDDED SYSTEMS, Bd. 2008, 1. Januar 2008 (2008-01-01), Seiten 1-16, XP55017567, ISSN: 1687-3955, DOI: 10.1155/2008/582648
- Martin Schoeberl ET AL: "Is Chip-Multiprocessing the End of Real-Time Scheduling?", Proceedings of the 9th International Workshop on Worst-Case Execution Time Analysis (WCET'2009), 30. Juni 2009 (2009-06-30), Seiten 1-11, XP055053724, Satellite Event to ECRTS'09, Dublin, Ireland Gefunden im Internet: URL:http://vesta.informatik.rwth-aachen.de /opus/volltexte/2009/2288/pdf/Schoeber.228 8.pdf [gefunden am 2013-02-18]
- NOJIRI T ET AL: "Domain Partitioning Technology for Embedded Multicore Processors", IEEE MICRO, IEEE SERVICE CENTER, LOS ALAMITOS, CA, US, Bd. 29, Nr. 6, 1. November 2009 (2009-11-01), Seiten 7-17, XP011299124, ISSN: 0272-1732
- JULIAN WOLF ET AL: "RTOS Support for Parallel Execution of Hard Real-Time Applications on the MERASA Multi-core Processor", OBJECT/COMPONENT/SERVICE-ORIENTED REAL-TIME DISTRIBUTED COMPUTING (ISORC), 2010 13TH IEEE INTERNATIONAL SYMPOSIUM ON, IEEE, PISCATAWAY, NJ, USA, 5. Mai 2010 (2010-05-05), Seiten 193-201, XP031827212, ISBN: 978-1-4244-7083-9

## Beschreibung

Die Erfindung betrifft ein Host-System, insbesondere ein Host-System mit einer Echtzeit-Erweiterung. Ferner betrifft die Erfindung ein Verfahren zum Betreiben eines Host-Systems. Darüber hinaus betrifft die Erfindung ein Computerprogramm und ein computerlesbares Medium.

In der Prozessor- und Hardwareentwicklung von Computern besteht ein allgemeines Streben nach immer weiter erhöhter Rechenleistung. Diese fand in der Vergangenheit insbesondere auch mittels der Steigerung der Taktfrequenzen der Prozessoren statt. Der Steigerung der Rechenleistung eines Prozessors durch Erhöhung der Taktfrequenz sind jedoch heutzutage insbesondere durch die starke Zunahme der elektrischen Verlustleistung (Wärmeerzeugung) Grenzen gesetzt. Eine Steigerung durch Parallelverarbeitung (Multicore-Systeme) wird wirtschaftlicher. Dies gilt nicht nur für Serversysteme sondern auch für alle anderen Computeranwendungen, z.B. auch die industrielle Automatisierungstechnik.

Die Anforderungen an die Rechenleistung steigen ständig. Die Integration von Bewegungssteuerung, programmierbare Steuerungen (PLC) und Human Machine Interface (HMI) in einem Gerät sind eine passende Aufgabenstellung für eine Multicore-Architektur. Auch die Virtualisierungstechnik ist ein weiterer Antrieb zur Nutzung solcher Systeme.

Die vervielfachte theoretische Rechenleistung (das n-fache bei n Cores) kann in der Realität nie erreicht werden, denn bei der Verteilung von Software, insbesondere eines Echtzeit-Kernels, von einem Singlecore- auf ein Multicore-System gelten in Bezug auf die Performance des Gesamtsystems weiterhin die alten Regeln:

Die bekannte Regel "MIPS = k * Speicherbandbreite" bedeutet letztlich, dass eine hohe Speicherbandbreite bei höherer Core-Anzahl lokale L2-Caches erfordert.

Lokale Caches lassen Amdahls Gesetz wirksam werden, welches in einer Formulierung lautet:
Wenn zusätzliche Prozessoren verwendet werden, steigen
   die Vorteile (mehr Arbeitszyklen) höchstens linear,
   die Kosten (Zugangskonflikte, Serialisierung usw.) quadratisch.
Somit verhält sich die Performance des Systems wie *C*(*n*) = *a·n-b·n*² mit n Anzahl der Prozessoren oder physikalische Kerne;
denn lokale Caches bedeuten unvermeidbar einen größeren Faktor b. Dies gilt insbesondere für die Verteilung einer Echtzeitlösung auf mehrere Cores oder Kerne, welche im Rahmen von Echtzeit-Erweiterungen notwendig sind. Bei der Verteilung zentraler gemeinsamer Daten wie z.B. Listen, Warteschlangen, (insbesondere Warteschlangen, die doppelt gefädelt sind, z.B. Thread- oder Timerverwaltung) muss auch für den Fall, dass keine Zugangskonflikte (non-contention Fall) auftreten, gezahlt werden, und zwar doppelt.

Zum einen muss für die Absicherung ein Spinlock (Prozeßsynchonisation, schützt gemeinsam genutzte Ressourcen vor modifizierendem Zugriff) verwendet werden, der letztlich zu einem atomaren RMW- (read-modify-write) Befehl führt, welcher im Bezug auf die Performance des Systems ein sehr teurer Vorgang ist, weil der Cache gesperrt werden muss. Kommt noch ein RFO-Zyklus (Read For Ownership) dazu, wird der negative Einfluss auf die Performance noch vergrößert.

Veränderungen an der Verzeigerung invalidieren die entsprechende Information in allen anderen L2-Caches, führen also letztlich zu Fehlzugriffen oder Misses, welche auch einen starken Einfluss auf die Performance haben.

Es gibt verschiedene existierende Lösungen für Echtzeit-Erweiterungen. Eine dieser bekannten Lösungen ist Xenomai, eine Echtzeiterweiterung für Linux, eine weitere ist IntervalZero RTX®, eine Echtzeiterweiterung für Windows.

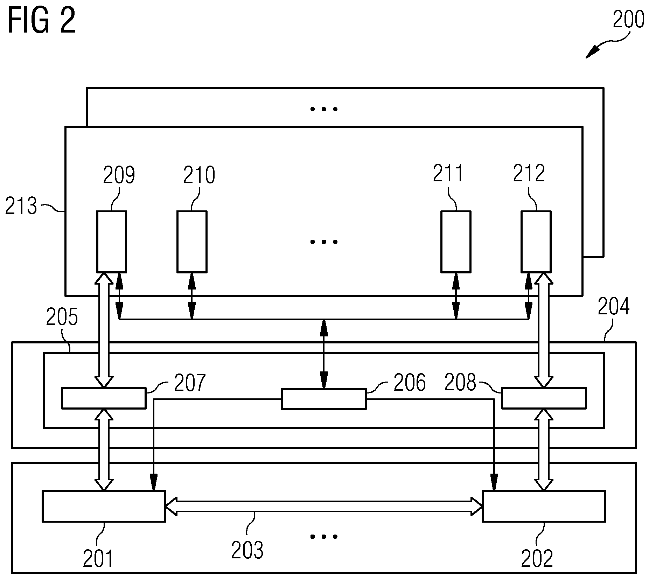

Zwar ermöglicht beispielsweise Xenomai eine Verteilung der Echtzeit auf mehrere Cores, aber diese Lösung beinhaltet die oben beschriebenen Punkte, welche zu einer nicht optimalen Performance führen. Anhand der Fig. 2 soll eine solche Echtzeit-Erweiterung schematisch am Beispiel eines Standard-Kernels in Multicore-Umgebung beschrieben werden.

Fig. 2 zeigt ein Host-System oder Echtzeit-System 200, welches eine Mehrzahl von physikalischen Cores 201 und 202 aufweist. Zwischen den Cores 201 und 202 ist mit einem Doppelpfeil 203 schematisch die Möglichkeit von Cross-Core Notifikationen oder Benachrichtigungen angedeutet, welche verwendet werden, um Signalisierungspfade bereitzustellen, bei denen sich Sender- und Empfängerinstanzen auf verschiedenen physikalischen Cores befinden, bzw. Prozesse auf verschiedenen Cores sind. Hierzu wird ein Inter-Processor-Interrupt (IPI) von einem an den anderen Core gesendet, damit die auszuführende Funktion stellvertretend durch den anderen Core ausgeführt wird.

Mit Block 204 ist schematisch ein Betriebssystem dargestellt, welches einen Standardkernel mit einer darin integrierten Echtzeit-Erweiterung 205 zur Verfügung stellt. Die integrierte Echtzeit-Erweiterung verwaltet mit einer zentralen Buchhaltung die globalen Ressourcen des Echtzeitsystems. Hierbei wird beim Zugriff auf die internen, globalen Datenstrukturen eine Synchronisation mit Hilfe von Spinlocks durchgeführt, welche in Fig. 2 schematisch als Global Lock 206 dargestellt sind.

Ferner stellt das Betriebssystem 204 Echtzeit-Timer 207 und 208 für eine Mehrzahl von Echtzeit-Threads 209, 210, 211 und 212 zur Verfügung, welche einer Echtzeit-Applikation 213 zugehörig sind.

Um grundsätzliche Echtzeitanforderungen erfüllen zu können, wird in bekannten Multicore-Systemen kein zentraler Timer-Baustein verwendet. Das Minimum ist eine corespezifische Timer-Verwaltung wie sie auch in Xenomai realisiert ist. Ferner kann, wie beispielsweise bei Xenomai, sichergestellt werden, dass bei einer Thread-Migration auch ein möglicher Timer-Request migriert. Damit wird es ermöglicht, dass beim Feuern eines Timers der zu weckende Echtzeit-Thread auf dem gleichen Core abläuft, der auch den Timer-Interrupt bearbeitet hat.

Die ACM-Veröffentlichung nach dem Stand der Technik mit dem Titel "A real-time Java chip-multiprocessor" aus ACM Transactions on Embedded Computing Systems, Bd. 10, Nr.1, 1. August 2010, lehrt einen Ansatz für einen Echtzeit-Java-Chip-Multiprozessor mit mehreren Cores ("JOP"), wobei jeder Prozess (e.g. Thread) ein einziger Core zugewiesen wird und wobei jeder Core einen lokalen Scheduler für die Behandlung lokaler Timer-Unterbrechungen und daher ein lokaler Timer ausführt.

Bisher sind jedoch keine Lösungen bekannt, die bei einer Echtzeit-Erweiterung durch eine optimale Verteilung der Software dafür sorgen, dass ein maximaler Performance-Gewinn und minimale Latenzzeiten das Ergebnis einer auf mehrere Cores verteilten Echtzeitlösung sind.

Somit ist es Aufgabe der Erfindung, ein Host-System mit einer Echtzeit-Erweiterung zu schaffen, welches in Hinblick auf die Latenzzeiten und/oder die Performance optimiert ist.

Diese Aufgabe wird gelöst durch ein Host-System, ein Verfahren zum Betreiben eines Host-Systems, ein Computerprogramm und durch ein computerlesbares Medium gemäß den unabhängigen Patentansprüchen. Weitere Ausgestaltungen sind in den abhängigen Ansprüchen angegeben.

Gemäß einem exemplarischen Aspekt wird ein Host-System mit einer Mehrzahl von Cores geschaffen, welches derart eingerichtet ist, dass auf jedem der Mehrzahl von Cores jeweils ein Echtzeitprozess und jeweils ein Core-lokaler Timer läuft.

Das heißt für jeden der Mehrzahl von Kernen oder Cores wird ein getrennter oder separater Echtzeitprozess gestartet. Auch für jeden der Mehrzahl von Cores wird jeweils ein getrennter Core-lokaler Timer gestartet. Die Bereitstellung von getrennten Core-lokalen Timern ermöglicht es, für die gesamte Zeitverwaltung Core-lokale Signalisierungspfade zu verwenden, was wiederum sicherstellt, dass keine oder zumindest weniger Cross-Core Notifikationen, d.h. Benachrichtigungen zwischen verschiedenen Cores des Host-Systems, benötigt werden. Insbesondere werden solche Core-lokalen Timer anstelle eines zentralen genutzten Timers, z.B. eines HPET-Timers, verwendet. Beispielsweise kann bei der Verwendung von Linux als Betriebssystem der Core-lokale Timer mittels eines LAPIC Timers realisiert werden.

Gemäß einem anderen Aspekt der Erfindung wird ein Verfahren zum Betreiben eines Host-Systems mit einer Echtzeit-Erweiterung geschaffen, wobei das Host-System eine Mehrzahl von Cores aufweist, wobei das Verfahren ein Betreiben eines Echtzeitprozesses je Core der Mehrzahl von Cores und ein Betreiben eines Core-lokalen Timers je Core der Mehrzahl von Cores aufweist.

Insbesondere wird unter dem Begriff "Betreiben" auch ein Starten des Echtzeitprozesses und/oder des Core-lokalen Timers verstanden.

Gemäß einer anderen Ausführungsform der Erfindung wird ein Computerprogramm geschaffen, welches derart eingerichtet ist, dass es, wenn es auf einem Prozessor ausgeführt wird, ein Verfahren gemäß einem exemplarischen Aspekt der Erfindung steuert.

Gemäß einem weiteren exemplarischen Aspekt der Erfindung wird ein computerlesbares Medium geschaffen, auf welchem ein Computerprogramm gespeichert ist, wobei das Computerprogramm derart eingerichtet ist, dass es, wenn es auf einem Prozessor ausgeführt wird, ein Verfahren gemäß einem exemplarischen Aspekt der Erfindung steuert.

Eine Grundidee eines beispielhaften Aspekts ist ein Host-System mit einer Echtzeit-Erweiterung, bei welchem es ermöglicht sei, mittels des Vorsehens mindestens eines Echtzeitprozesses und eines Core-lokalen Timers je Core oder Kern die Anzahl von Cross-Core Notifikationen zu reduzieren oder diese ganz auszuschließen. Beispielsweise kann sich die Anzahl der Cross-Core Notifikationen reduzieren, da bei der Verwendung von Core-lokalen Timern die Zeitverwaltung mittels Core-lokalen Signalisierungspfaden ermöglicht ist. Dies führt dazu, dass die Latenzen und die Gesamtperformance des Host-Systems optimiert wird.

Nachfolgend werden Ausführungsbeispiele des Host-System beschrieben. Jedoch gelten die entsprechenden Ausgestaltungen und Merkmale auch für das Verfahren zum Betreiben eines Host-Systems, das Computerprogramm und das computerlesbare Medium.

Gemäß einem Ausführungsbeispiel ist das Host-System derart eingerichtet, dass Core-lokale Interruptsperren verwendbar sind.

Insbesondere können diese Core-lokalen Interruptsperren anstelle von Spinlocks verwendet oder vorgesehen werden, bzw. diese ersetzen. Hierdurch wird insbesondere die Partitionierung von Datenstrukturen, z.B. Core-lokale oder kernlokale Warteschlagen für Echtzeit-Runqueue oder für Timer-Handling, die Verwendung von Spinlocks überflüssig. Somit reicht die Verwendung von Core-lokalen Interrupstsperren aus oder gewährleistet, beim Zugriff auf Ressourcen des Host-Systems, welche auf dem Host-System installiert sind oder laufen, eine Synchronisation.

Gemäß einem anderen Ausführungsbeispiel ist das Host-System derart eingerichtet, dass Core-lokale Signalisierungspfade implementiert sind.

Unter Core-lokalen Signalisierungspfaden mag insbesondere verstanden werden, dass Sender- und Empfangsinstanzen auf dem gleichen Core ablaufen. Beispielsweise können die Core-lokalen Signalisierungspfade logische, d.h. mittels Software ausgebildete, Pfade sein. Insbesondere sind Interrupts von Echtzeit-Baugruppen immer an den Kern oder Core gebunden, auf welchen auch die entsprechende Echtzeit-Applikation läuft, die durch den entsprechenden Interrupt benachrichtigt wird. Hierdurch werden Cross-Core Notifikationen verhinderbar.

Gemäß einem anderen Ausführungsbeispiel ist das Host-System derart eingerichtet, dass eine prozessspezifische Verwaltung von Datenstrukturen ermöglicht wird, d.h. es ist eine prozessspezifische Verwaltung oder anschaulich Buchhaltung, von verschiedenen, bisher typischerweise global verwalteter Datenstrukturen möglich. Beispiele für solche Datenstrukturen sind insbesondere eine Echtzeit-Taskliste oder Futex Header sein, im Falle dass ein Betriebssystem des Host-Systems ein Linux-Betriebssystem ist. Dies mag eine organisatorische Maßnahme sein, um eine Verteilung von Echtzeitprozessen oder -applikationen auf mehrere Kerne zu verbessern oder zu ermöglichen. Neben einer prozessspezifischen Verwaltung von Datenstrukturen, welche Core-lokal durchgeführt werden, kann es zur Verwaltung aller Echtzeitprozesse im Gesamtsystem bevorzugt oder auch nötig sein, weiterhin Spinlocks zu verwenden. In spezifischen Ausführungsbeispielen mögen insbesondere globale Datenstrukturen weiterhin durch Spinlocks abgesichert sein. Hierbei ist jedoch zu beachten, dass diese Spinlocks nicht Bestandteil von echtzeitkritischen Aufgaben sind, da ein Zugriff nur beim Anmelden bzw. Shutdown eines Echtzeitprozesses notwendig ist.

Hierdurch ist es möglich, mehrere Echtzeit-Applikationen zu unterstützen.

Gemäß einem anderen Ausführungsbeispiel ist das Host-System derart eingerichtet, dass beim Starten eines echtzeitfähigen Systems mittels eines zugehörigen echtzeitfähigen Prozesses eine dem echtzeitfähigen System zugeordnete Echtzeitdomäne eingerichtet wird, wenn der zugehörige echtzeitfähige Prozess der erste echtzeitfähige Prozess ist, der auf dem entsprechenden Core des Host-Systems gestartet wird.

Eine Trennung zwischen dem Starten eines Echtzeitprozesses und dem Einrichten einer Echtzeitdomäne erfolgt, insbesondere kann die Installation der Echtzeitdomäne immer ondemand erfolgen. Hierbei mag die Installation nur durch den ersten Echtzeitprozess, der auf dem entsprechenden Kern bzw. Core gestartet wird bzw. wurde, geschehen.

Gemäß einem anderen Ausführungsbeispiel ist das Host-System derart eingerichtet, dass ein Shutdown der Echtzeitdomäne erfolgt, wenn der letzte Echtzeitprozess terminiert, der auf dem entsprechenden Kern bzw. Core ausgeführt wird.

Gemäß einem weiteren Ausführungsbeispiel eines Echtzeitprozesses, welcher auf einem der Mehrzahl von Cores läuft, auf einen anderen der Mehrzahl von Cores verhindert ist.

Insbesondere kann somit ein Echtzeitprozess oder Echtzeit-Thread immer auf dem Kern ausgeführt werden, den eine Applikation oder das Echtzeitsystem für diesen Echtzeitprozess oder Echtzeit-Thread festgelegt hat und somit eine implizite Migration von Echtzeit-Threads auf einen anderen Kern/Core nicht unterstützt werden. Ein Load-Balancing wird somit ausgeschlossen sein, jedoch wird dies dazu führen, dass mehrere echtzeitfähige Prozesse auf einem Host-System ohne Echtzeit-/Performance-Einbußen gegenüber einem System mit nur einem Echtzeitprozess auftreten. Ein solcher Ausschluss der Migration, d.h. auch ein Ausschluss eines Lastausgleichs ermöglicht insbesondere eine Performancesteigerung, indem Verwaltungsaufwand reduziert wird, welcher mit Cross-Core Notifikationen verbunden ist.

Zusammenfassend wird ein exemplarischer Aspekt darin gesehen, dass ein Host-System geschaffen wird, welches ermöglicht mehrere echtzeitfähige Prozesse in einem Host-System zu schaffen, ohne dass Echtzeit-/Performance-Einbußen gegenüber einem System mit nur einem Echtzeitprozess auftreten oder diese zumindest reduziert sind. Das Host-System mag ein Linux-System oder ein Windows-System oder ein System sein, auf welchem ein beliebiges anderes Betriebssystem installiert ist. Insbesondere wird die optimierte Performance dadurch erzielt, dass
- je Kern ein Echtzeitprozess mit einer automatischen, aber festen Zuordnung der Ressourcen zur lokalen Ablaufverwaltung der Threads, z.B. Interruptquellen, Timer, Listen, Warteschlagen, des Echtzeitprozesses gestartet wird;
- Core-lokale oder kernspezifische Timer anstelle von zentralen Hardware-Timer verwendet werden;
- ein Hochfahren bzw. Shutdown von einzelnen Echtzeitprozessen anstelle eines Hochfahrens bzw. Shutdown des gesamten Echtzeitsystems durchgeführt werden.
Eine Echtzeit-Erweiterung ist ermöglicht mit kürzeren Reaktionszeiten und schnellerer Thread-Kommunikation/- Synchronisation für mehr als einen Prozess bei einer Multicore Anwendung.

Insbesondere ist es möglich, Beeinträchtigung der Performance durch Cross-Core Notifikationen zu vermindern oder zu verhindern. Diese treten im Stand der Technik immer dann auf, wenn ein Signalisierungspfad (von der Senderbis zur Empfängerinstanz) nicht Core-lokal oder Core-lokal ist, da dann ein Core einen Inter-Processor Interrupt (IPI) an einen anderen Core senden, damit die auszuführende Funktion stellvertretend auf dem anderen Core ausgeführt wird.

Vorteilhafter Weise werden Latenzen verringert, auf welche bei der Verteilung von Interrupts zu achten ist. Insbesondere wird bei dem beschriebenen Host-System bzw. durch die Software, welche auf diesem Host-System läuft verhindert, dass eine Signalisierung durch einen Interrupt auf einem ersten Prozessor (CPUx) dazu führt, dass sich der zu weckende Thread auf einem zweiten Prozessor (CPUy) befindet. Somit wird verhindert, dass die Benachrichtigung nicht direkt erfolgent, sondern über eine Cross-Core Notifikation initiiert werden muss, was zu größeren Latenzen führen würde.

Weiterhin kann im Stand der Technik die Notwendigkeit einer Cross-Core Notifikation bei der Echtzeit-Thread Kommunikation entstehen, wenn sich Sender- und Empfänger-Thread auf unterschiedlichen Cores befinden oder wenn sich Sender und Empfänger bei einem I/O-Event auf unterschiedlichen Cores/Kernen befinden. Auch diese Cross-Core Notifikationen mögen bei einem Host-System gemäß dem beispielhaften Aspekt verringerbar oder verhinderbar sein, wenn Core-lokale Signalpfade und/oder Core-lokale Timer verwendet werden. Mittels der Bereitstellung von Core-lokalen Signalpfaden und/oder Interruptsperren ist es möglich, die Notwendigkeit oder Häufigkeit von Spinlocks oder globalen Kernel-Locks, mit welchen die meisten Datenstrukturen abgesichert sind, zu vermindern, welche globalen Kernel-Locks sich, im Falle dass viele aktive Kerne für das Echtzeit-System verwendet werden, besonders negativ auf die Skalierbarkeit des Multikern-Systems auswirken.

Gemäß der Ausgestaltung nach dem exemplarischen Aspekt bleiben im Falle der Verwendung eines Linux-Betriebssystems mit der Ausnahme von POSIX Message-Queues alle Warteschlangen Core-lokal und können mit lokalen Interruptsperren abgesichert werden. Da die POSIX Message-Queues zur Kommunikation zwischen Prozessen (Linux und/oder Echtzeit) verwendet werden, werden diese weiterhin auch unter Verwendung von Spinlocks synchronisiert. Für Futexe, im Falle von Linux, mag gelten, dass - wie bei der Singlecore-Lösung - nur private (prozesslokale) Futexe unterstützt werden. Somit würde eine Umrechnung auf physikalische Adressen entfallen, wodurch Semaphore-Funktionen besonders schnell werden.

Die oben erläuterten und weitere exemplarische Aspekte und Ausführungsbeispiele werden dem Fachmann durch die nachfolgend erläuterten Ausführungsbeispiele klarer verständlich. Ferner sollte bemerkt werden, dass Merkmale, welche oben im Zusammenhang mit einem bestimmten exemplarischen Aspekt oder Ausführungsbeispiel beschrieben wurden, auch mit anderen exemplarischen Aspekten und Ausführungsbeispielen kombiniert werden können.
Fig. 1 zeigt eine schematische Darstellung eines Host-Systems gemäß einem Ausführungsbeispiel.
Fig. 2 zeigt eine schematische Darstellung eines Host-Systems gemäß Stand der Technik.

Die Darstellungen in den Figuren sind schematisch. Gleiche oder ähnliche Bauteile oder Elemente in den verschiedenen Figuren sind mit gleichen oder ähnlichen Bezugszeichen versehen.

Im Folgenden wird anhand der Linux-basierten AuDis Echtzeit-Erweiterung für Multicore-Systeme ein Ausführungsbeispiel beschrieben, wobei bei der Echtzeit-Erweiterung mittels einer dedizierte Verteilung und Anpassung der Echtzeit-Software vermieden wird, dass die Performance bei einer gesteigerten Anzahl von Cores nicht optimal anwächst. Die Prinzipien können aber auch grundsätzlich auf jede andere Echtzeit-Erweiterung übertragen werden, um damit das Echtzeitverhalten bzw. die Performance bei einer verteilten Echtzeitlösung zu optimieren.

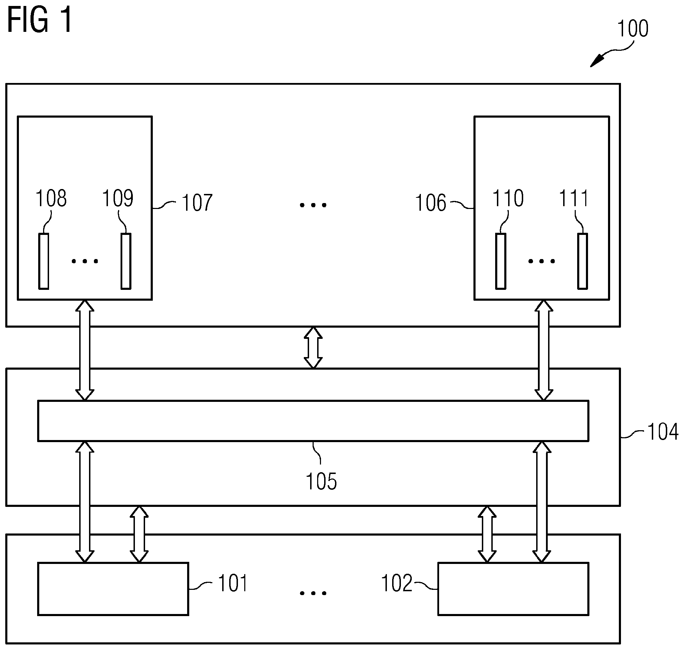

Fig. 1 zeigt eine schematische Darstellung eines Host-Systems 100 gemäß einem Ausführungsbeispiel. Das Host-System weist eine Mehrzahl von physikalischen Cores oder Kernen 101 und 102 auf, von welchen der Übersichtlichkeit halber nur zwei gezeigt sind. Im Gegensatz zu den in Fig. 2 gezeigten Host-System ist zwischen den Cores 101 und 102 keine Möglichkeit von Cross-Core Notifikationen oder Benachrichtigungen angedeutet. Mit Block 104 ist schematisch ein Betriebssystem, z.B. Linux, dargestellt, welches einen Standardkernel mit einer darin integrierten Echtzeit-Erweiterung 105 zur Verfügung stellt. Die integrierte Echtzeit-Erweiterung verwaltet mit einer zentralen Buchhaltung die globalen Ressourcen des Echtzeitsystems.

Ferner sind in Fig. 1 eine Mehrzahl von Echtzeit-Applikationen 106 und 107 dargestellt, innerhalb derer mehrere Threads 108, 109, 110 und 111 abgearbeitet werden können. Die Echtzeitapplikationen sind ein Teil aller regulären Prozesse, welche abgearbeitet werden.

Es ist anzumerken, dass die Anzahl der Cores und die Anzahl der Threads selbstverständlich nicht auf die dargestellte Anzahl beschränkt sind, sondern je nach Ausgestaltung und Bedarf angepasst werden können.

Bei einem Ausführungsbeispiel ist ein Echtzeitprozess je Core vorgesehen. In einer Konfiguration, wie sie schematisch in Fig. 1 dargestellt ist, ist es auch möglich in einem Host-System auf mehrere Echtzeitprozesse zu erweitern, ohne Abstriche an Latenzzeiten/Performance für den Einzelprozess machen zu müssen. Verfügt das Host-System System über genügend physikalische Cores, kann auch eine exklusive Core-Nutzung durch die Echtzeit-Applikation eingestellt werden. Standard-Linux und dessen Anwenderprogramme werden dann von diesem Core verbannt, und die maximale Latenzzeit wird sich weiter verringern, da ein Adressraumwechsel verhindert wird.

Die beschriebenen Maßnahmen, d.h. das Vorsehen von Core-lokalen Interruptsperren, Core-lokalen Signalpfaden und/oder Core-lokalen Timern werden üblicherweise in zentralen Routinen implementiert und lassen sich damit im Rahmen einer Kernelerzeugung leicht ändern. Wird also maximale Flexibilität in der Verteilung der Aufgaben und nicht bestmögliches Echtzeitverhalten gefordert, so lassen sich auch mit geringem Mehraufwand die folgenden Zuordnungen erreichen.

Bei einem spezifischen Ausführungsbeispiel wird ein Echtzeitprozess mit Threads auf mehreren Cores ausgeführt. Hierbei wird der Echtzeitprozess auf einem Core gestartet, wobei ein Anwender durch Setzen einer Core-Affinity für Echtzeit-Threads erreichen kann, dass ein Echtzeit-Thread auf einem bestimmten Core ausgeführt wird. In diesem Falle mögen lokale Interruptsperren ausreichend sein, wenn es um die Synchronisation von Core-lokalen Warteschlangen geht. Allerdings werden bei diesem Anwendungsfall Signalisierungspfade durchlaufen, die eine Synchronisation mit Spinlocks für Prozess-spezifische Warteschlangen benötigen. Es können hierbei auch Signalisierungspfade entstehen, die nicht mehr Core-lokal sind, so dass die Notwendigkeit einer Cross-Core Notifikation entsteht.

Bei einem anderen Ausführungsbeispiel werden mehrere Echtzeitprozesse mit Threads auf mehreren Cores verwirklicht. Hierbei wird der allgemeinste Fall der Verteilung einer Echtzeitaufgabe erreicht. Die Echtzeit-Threads einer Echtzeit-Applikation weerden auf einem beliebigen Core ausgeführt, jedoch kann diese Eigenschaft durch mehrere Echtzeit-Applikationen genutzt werden.

Bei der bisherigen Singlecore-Lösung auf einem Linux-System ist die Überprüfung auf einen notwendigen Adressraumwechsel nur beim Übergang zwischen Linux-Domain und Echtzeit-Domain notwendig. Werden aber mehrere Echtzeitprozesse auf einem Core unterstützt, dann muss diese Überprüfung auch für den Thread-Wechsel innerhalb der Echtzeit-Domain gemacht werden. Dieses Schema würde auch die Möglichkeit einschließen, dass auf einem Singlecore-System mehrere Echtzeitprozesse gestartet werden können.

Die Ausführung der Erfindung ist nicht auf diese Anwendungsfälle und die weiter oben erwähnten Systemkonfigurationen beschränkt, sondern ebenso in einer Vielzahl von Abwandlungen möglich, die im Rahmen fachgemäßen Handelns liegen. Ferner sollte darauf hingewiesen werden, dass Bezugszeichen in den Ansprüchen nicht als beschränkend aufzufassen sind, und dass die Begriffe "aufweisen" bzw. "aufweisend" und ähnliche Begriffe nicht das Vorhandensein von weiteren Elementen oder Schritten ausschließt. Auch schließt ein Aufzählen als mehrere Mittel oder Elemente nicht aus, dass diese Mittel oder Elemente als ein einziges Mittel oder Element ausgebildet werden können.

### Bezugszeichenliste

- 100: Host-System
- 101: Core
- 102: Core
- 104: Betriebssystem
- 105: Echtzeit-Erweiterung
- 106: Echtzeit-Applikation
- 107: Echtzeit-Applikation
- 108-111: Echtzeit-Threads
- 200: Host-System
- 201: Core
- 202: Core
- 203: Cross-Core Notifikationen
- 204: Betriebssystem
- 205: Echtzeit-Erweiterung
- 206: Global Lock
- 207: Echtzeit-Timer
- 208: Echtzeit-Timer
- 209-212: Echtzeit-Threads
- 213: Echtzeit-Applikation

## Patentansprüche

1. Host-System (100) mit einer Mehrzahl von Cores (101, 102), welches derart eingerichtet ist, dass auf jedem der Mehrzahl von Cores (101, 102) jeweils ein Echtzeitprozess (106, 107) und jeweils ein Core-lokaler Timer läuft wobei das Host-System (100) derart eingerichtet ist, dass eine Core-lokal durchgeführte prozessspezifische Verwaltung von Datenstrukturen ermöglicht wird, wobei es sich bei der Datenstruktur um eine Echtzeit-Taskliste oder Futex Header handelt.

2. Host-System (100) gemäß Anspruch 1, wobei das Host-System (100) derart eingerichtet ist, dass Core-lokale Interruptsperren verwendbar sind.

3. Host-System (100) gemäß Anspruch 1 oder 2, wobei das Host-System (100) derart eingerichtet ist, dass Core-lokale Signalisierungspfade implementiert sind.

4. Host-System (100) gemäß einem der Ansprüche 1 bis 3, wobei das Host-System (100) derart eingerichtet ist, dass eine Migration eines Echtzeitprozesses, welcher auf einem der Mehrzahl von Cores (101, 102) läuft, auf einem anderen der Mehrzahl von Cores (101, 102)verhindert ist, indem der Echtzeitprozeß immer auf dem Core (101, 102) ausgeführt wird, den eine Applikation oder das Echtzeitsystem für diesen Echtzeitprozeß festgelegt hat.

5. Host-System (100) gemäß Anspruch 4, wobei durch Setzen einer Core-Affinity erreicht werden kann, dass ein Echtzeit-Prozeß auf einem bestimmten Core (101, 102) ausgeführt wird.

6. Verfahren zum Betreiben eines Host-Systems (100) mit einer Echtzeit-Erweiterung (105), wobei das Host-System (100) eine Mehrzahl von Cores (101, 102) aufweist, gemäß einem der Patentansprüche 1 bis 5, wobei das Verfahren aufweist:
- Starten eines Echtzeitprozesses je Core (101, 102) der Mehrzahl von Cores; und
Starten eines Core-lokalen Timers je Core (101, 102) der Mehrzahl von Cores, wobei das Host-System (100) derart eingerichtet ist, dass eine Core-lokal durchgeführte prozessspezifische Verwaltung von Datenstrukturen ermöglicht wird, wobei es sich bei der Datenstruktur um eine Echtzeit-Taskliste oder Futex Header handelt.

7. Computerprogramm, welches derart eingerichtet ist, dass es, wenn es auf einem Prozessor ausgeführt wird, ein Verfahren gemäß Anspruch 6 steuert.

8. Computerlesbares Medium, auf welchem ein Computerprogramm gespeichert ist, wobei das Computerprogramm derart eingerichtet ist, dass es, wenn es auf einem Prozessor ausgeführt wird, ein Verfahren gemäß Anspruch 6 steuert.

## Claims

1. Host system (100) comprising a plurality of cores (101, 102), which is configured in such a manner that one real-time process (106, 107) and one core-local timer is run on each of the plurality of cores (101, 102) wherein the host system (100) is configured in such a manner that a process-specific management of data structures which is performed core-locally is provided for, wherein the data structure is a real-time task list or Futex header.

2. Host system (100) according to Claim 1, wherein the host system (100) is configured in such a manner that core-local interrupt blocks can be used.

3. Host system (100) according to Claim 1 or 2, wherein the host system (100) is configured in such a manner that core-local signaling paths are implemented.

4. Host system (100) according to one of Claims 1 to 3, wherein the host system (100) is configured in such a manner that a migration of a real-time process which runs on one of the plurality of cores (101, 102) is prevented on another one of the plurality of cores (101, 102) by the real-time process always being performed on the core (101, 102) which is specified by an application or the real-time system for this real-time process.

5. Host system (100) according to Claim 4, wherein, by setting a core affinity, it can be achieved that a real-time process is executed on a particular core (101, 102).

6. Method for operating a host system (100) comprising a real-time extension (105), wherein the host system (100) has a plurality of cores (101, 102), according to one of Patent Claims 1 to 5, wherein the method has:
starting one real-time process per core (101, 102) of the plurality of cores; and
starting one core-local timer per core (101, 102) of the plurality of cores wherein the host system (100) is configured in such a manner that a process-specific management of data structures which is performed core-locally is provided for, wherein the data structure is a real-time task list or Futex header.

7. Computer program which is configured in such a manner that, when it is executed on a processor, it controls a method according to Claim 6.

8. Computer-readable medium on which a computer program is stored, wherein the computer program is configured in such a manner that, when it is executed on a processor, it controls a method according to Claim 6.

## Revendications

1. Système hôte (100) comportant une pluralité de coeurs (101, 102), configuré de telle sorte que respectivement un processus en temps réel (106, 107) et respectivement une horloge locale de coeur tournent sur chacun des plusieurs coeurs (101, 102), le système hôte (100) étant configuré de telle sorte qu'est rendue possible une gestion de structures de données spécifique au processus et effectuée localement sur un coeur, la structure de données étant une liste de tâches en temps réel ou un Futex Header.

2. Système hôte (100) selon la revendication 1, le système hôte (100) étant configuré de telle sorte que peuvent être utilisés des blocages d'interruption locaux sur un coeur.

3. Système hôte (100) selon la revendication 1 ou 2, le système hôte (100) étant configuré de telle sorte que sont implémentés des chemins de signalisation locaux sur un coeur.

4. Système hôte (100) selon l'une des revendications 1 à 3, le système hôte (100) étant configuré de telle sorte qu'une migration d'un processus en temps réel qui tourne sur l'un des plusieurs coeurs (101, 102) est empêchée sur un autre des plusieurs coeurs (101, 102) par le fait que le processus en temps réel est toujours exécuté sur le coeur (101, 102) qui est déterminé par une application ou le système en temps réel pour ce processus en temps réel.

5. Système hôte (100) selon la revendication 4, l'application d'une affinité de coeur permettant d'obtenir l'exécution d'un processus en temps réel sur un coeur déterminé (101, 102).

6. Procédé d'exploitation d'un système hôte (100) comportant une extension temps réel (105), le système hôte (100) comportant une pluralité de coeurs (101, 102), selon l'une des revendications 1 à 5, le procédé comportant :
- le lancement d'un processus en temps réel pour chacun (101, 102) des plusieurs coeurs et
- le lancement d'une horloge locale de coeur pour chacun (101, 102) des plusieurs coeurs, le système hôte (100) étant configuré de telle sorte qu'est rendue possible une gestion de structures de données spécifique au processus et effectuée localement sur un coeur, la structure de données étant une liste de tâches en temps réel ou un Futex Header.

7. Programme informatique configuré de telle sorte qu'il commande un procédé selon la revendication 6 lorsqu'il est exécuté sur un processeur.

8. Support lisible par ordinateur sur lequel est sauvegardé un programme informatique, le programme informatique étant configuré de telle sorte qu'il commande un procédé selon la revendication 6 lorsqu'il est exécuté sur un processeur.
